# EUROPÄISCHE PATENTSCHRIFT

(11) **EP 1 308 340 B1**
(45) Veröffentlichungstag und Bekanntmachung des Hinweises auf die Patenterteilung: **05.07.2006**
(21) Anmeldenummer: 02024005.7
(22) Anmeldetag: 26.10.2002
(51) Int. Cl.: B60K 31/00

(54) **Einrichtung und Verfahren zur Geschwindigkeitssteuerung bei einem Kraftfahrzeug**
Device and method for vehicle cruise control
Procédé et appareil de régulation de vitesse pour un véhicule

(30) Priorität: 06.11.2001 DE 10154385
(43) Veröffentlichungstag der Anmeldung: 07.05.2003
(60) Teilanmeldung: 05003207.7
(73) Patentinhaber: ADAM OPEL AG, 65423 Rüsselsheim (DE)
(72) Erfinder: Diehl, Peter G., Dipl.-Ing., 64521 Gross-Gerau (DE); Reuter, Udo, Dipl.-Ing., 55278 Dalheim (DE)

(56) Entgegenhaltungen:
- DE-A- 19 509 494
- DE-A- 19 654 218
- DE-A- 19 947 313
- US-A- 4 858 135
- US-A- 5 665 026
- US-A- 5 774 820
- US-A- 5 794 735
- PATENT ABSTRACTS OF JAPAN vol. 1999, no. 12, 29. Oktober 1999 (1999-10-29) -& JP 11 189068 A (HINO MOTORS LTD), 13. Juli 1999 (1999-07-13)

## Beschreibung

Die Erfindung betrifft eine Einrichtung zur Einstellung eines Grenzgeschwindigkeits-Systems und eines Fahrgeschwindigkeits-Regelungs-Systems für ein Kraftfahrzeug.

Eine solche Einrichtung ist in der Gattungsgemäßen JP 11189068 beschrieben, bei der mit Betätigung eines ersten Schalters die aktuelle Geschwindigkeit als maximale Geschwindigkeit und mit Betätigung eines zweiten Schalters die aktuelle Geschwindigkeit als konstant zu fahrende Geschwindigkeit festgelegt wird. Die Schalter sind räumlich voneinander getrennt.

Zum Stand der Technik ist auch die DE 199 47 313 A1 zu berücksichtigen. In diesem Dokument ist ein Fahrgeschwindigkeitsbegrenzungssystem beschrieben, bei dem sowohl eine maximale als auch eine minimale Grenzgeschwindigkeit vom Fahrer eingestellt werden kann.

Zum Stand der Technik gehört auch die DE 195 09 492 C2: Hierbei hat die Einrichtung einen gemeinsamen Bedienhebel für eine Tempomat-Geschwindigkeitsregeleinheit und eine Geschwindigkeits-Begrenzungsfunktionsbaugruppe. Mit dem Bedienhebel wird ein Geschwindigkeitssollwert der Tempomat-Geschwindigkeitsregeleinheit und der Geschwindigkeits-Begrenzungsfunktionsbaugruppe eingestellt. Mittels eines Schalters lässt sich zwischen der Tempomat-Geschwindigkeitsregeleinheit und der Geschwindigkeits-Begrenzungsfunktionsbaugruppe umschalten.

Nachteilig bei der bekannten Einrichtung und dem bekannten Verfahren ist, dass sich die Auswahl der Geschwindigkeiten sehr unkomfortabel gestaltet. Weiterhin besteht die Gefahr einer Fehlbedienung, wenn versehentlich eine maximal bzw. minimal zu fahrende Geschwindigkeit des Kraftfahrzeuges auf als konstant zu fahrende Geschwindigkeit eingestellt wird.

Aus der EP 0 703 110 B1 ist zudem ein Verfahren bekannt, bei dem auf einen geschwindigkeitsregelnden Eingriff mit auf eine Grenzgeschwindigkeit gesetzter Sollgeschwindigkeit umgeschaltet wird, sobald die Istgeschwindigkeit innerhalb einer vorgegebenen Zeitspanne die Grenzgeschwindigkeit erreicht

Der Erfindung liegt das Problem zugrunde, eine Einrichtung der eingangs genannten Art so weiterzubilden, dass eine Fehlbedienung oder eine Verwechslung der Systeme und ein Konflikt zwischen den Eingaben für die Systeme auf möglichst einfache Weise vermieden werden.

Das Problem wird erfindungsgemäß jeweils durch einen der alternativen Gegenstände des Anspruches 1 gelöst.

Durch diese Gestaltung lassen sich mit der einen Bedieneinheit maximale und minimale Grenzgeschwindigkeiten festlegen, während mit der anderen Bedieneinheit die konstant zu fahrende Geschwindigkeit eingestellt wird. Durch die räumliche Trennung der Bedieneinheiten der Systeme wird ein Verwechseln der Einstellungen der Geschwindigkeiten zuverlässig vermieden. Weiterhin sind durch die räumliche Trennung der Bedieneinheiten die Funktionen beider Systeme ohne Betätigung von Wechselschaltern oder dergleichen sofort zugänglich, so dass sich die Bedienung der erfindungsgemäßen Einrichtung besonders komfortabel gestaltet. Das Grenzgeschwindigkeits-System kann wahlweise als eigenständiges System ausgebildet sein oder Funktionelle Baugruppen des Fahrgeschwindigkeits-Regelungs-Systems beinhalten.

Ein einfaches und fehlbediensicheres Umschalten zwischen der jeweiligen Grenzgeschwindigkeiten einerseits und der konstant zu fahrenden Fahrgeschwindigkeit andererseits wird vor allem dadurch erreicht, dass die Einrichtung so ausgelegt ist, dass bei Bedienung des einen Systems das andere System abgeschaltet wird.

Durch diese Gestaltung lässt sich auf jedes der Systeme einfach mittels einer einzelnen Bedienaktion zugreifen. Mit wenigen Bedienaktionen und damit besonders einfach kann wahlweise die konstant zu fahrende Geschwindigkeit oder die Grenzgeschwindigkeit eingestellt werden. Hierdurch wird zudem ein Konflikt zwischen einander widersprüchlichen Eingaben vermieden, da nur der zuletzt eingegebene Befehl an das entsprechende System berücksichtigt wird.

Die erfindungsgemäße Einrichtung gestaltet sich konstruktiv besonders einfach, wenn bei einem für die Einstellung des Fahrgeschwindigkeits-Regelungs-Systems vorgesehenen Lenkstockhebel die Bedieneinheit zur Einstellung des Grenzgeschwindigkeits-Systems einen weiteren Lenkstockhebel aufweist.

Zur weiteren Erhöhung des Komforts bei der Bedienung der erfindungsgemäßen Einrichtung trägt es bei, wenn die Lenkstockhebel der beiden Bedieneinheiten einender entsprechende Schaltelemente und/oder Regelelemente haben.

Eine für einen Fahrer des Kraftfahrzeuges besonders einfach zu merkende Bedienung der beiden Systeme wird gemäß einer anderen vorteilhaften Weiterbildung der Erfindung mit besonders geringem baulichen Aufwand ermöglicht, wenn die Lenkstockhebel spiegelbildlich zueinander angeordnet sind. Vorzugsweise weist der linke Lenkstockhebel die Bedieneinheiten für das Fahrgeschwindigkeits-Regelungs-System und der rechte Lenkstockhebel die Bedieneinheiten für das Grenzgeschwindigkeits-System auf.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine schematische Darstellung einer erfindungsgemäßen Einrichtung für ein Grenzgeschwindigkeits-System und eines Fahrgeschwindigkeits-Regelungs-System,
- Fig. 2: eine Ansicht auf ein Lenkrad eines Kraftfahrzeuges mit zwei Lenkstockhebeln.

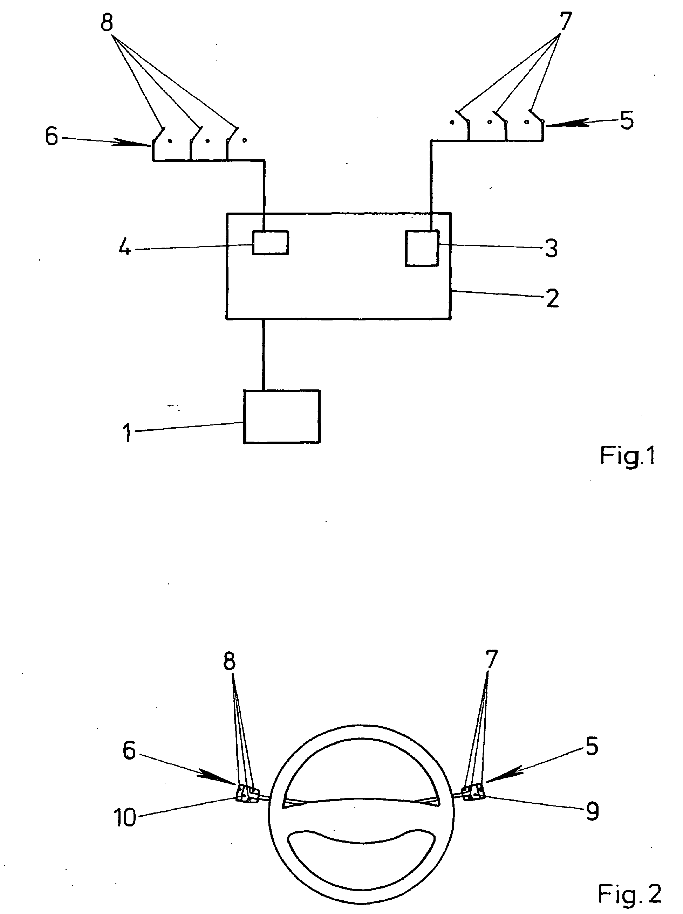

Figur 1 zeigt schematisch eine mit einem Steuergerät 1 eines Kraftfahrzeuges verbundene Steuereinrichtung 2. Das Steuergerät 1 des Kraftfahrzeuges dient zur Leistungsregelung einer nicht dargestellten Antriebseinrichtung des Kraftfahrzeuges und ist beispielsweise mit einer Drosselklappe, einer Anlage zur Einspritzung von Kraftstoff und einem Fahrpedal des Kraftfahrzeuges verbunden. Die Steuereinrichtung 2 hat eine Baugruppe 3 eines Grenzgeschwindigkeits-Systems und eine Baugruppe 4 eines Fahrgeschwindigkeits-Regelungs-Systems. Die Baugruppen 3, 4 sind jeweils mit Bedieneinheiten 5, 6 verbunden. Die Bedieneinheiten 5, 6 weisen jeweils Taster 7, 8 zum Programmieren oder Übernehmen von Geschwindigkeiten des Kraftfahrzeuges in die einzelnen Baugruppen 3, 4 auf.

Bei der Bedieneinheit 5 des Grenzgeschwindigkeits-Systems könnte beispielsweise einer der Taster 7 die momentane Fahrzeuggeschwindigkeit als Grenzgeschwindigkeit in die Baugruppe 3 übernehmen oder zum Inkrementieren der Grenzgeschwindigkeiten in Schritten, beispielsweise 5 km/h dienen. Der zweite der Taster 7 könnte während der Einstellung des Wertes für die Grenzgeschwindigkeit dekrementieren und der dritte der Taster 7 zur Aktivierung oder Deaktivierung des Grenzgeschwindigkeits-Systems dienen.

Figur 2 zeigt ein Lenkrad eines Kraftfahrzeuges mit zwei Lenkstockhebeln 9, 10. Der linke Lenkstockhebel 10 weist die Taster 8 aus Figur 1 für das Fahrgeschwindigkeits-Regelungs-System auf, während der rechte Lenkstockhebel 9 die Taster 7 aus Figur 1 für das Grenzgeschwindigkeits-System trägt. Bei der Betätigung beispielsweise der Taster 7 der einen in Figur 1 dargestellten Baugruppe 3 wird automatisch auf diese Baugruppe 3 umgeschaltet und die andere Baugruppe 4 deaktiviert. Das Grenzgeschwindigkeits-System und das Fahrgeschwindigkeits-Regelungs-System lassen sich jeweils durch Betätigung der entsprechenden Taster 7, 8 auf den jeweiligen Lenkstockhebeln 9, 10 aktivieren und programmieren.

### Bezugszeichenliste

- 1: Steuergerät
- 2: Steuereinrichtung
- 3, 4: Baugruppe
- 5, 6: Bedieneinheit
- 7, 8: Taster
- 9, 10: Lenkstockhebel

## Patentansprüche

1. Einrichtung zur Einstellung eines Grenzgeschwindigkeits-Systems und eines Fahrgeschwindigkeits-Regelungs-Systems für ein Kraftfahrzeug, bei der eine über eine Bedieneinheit festlegbare Grenzgeschwindigkeit einer maximal oder minimal fahrbaren Geschwindigkeit des Kraftfahrzeuges entspricht und bei der das ebenfalls über eine Bedieneinheit einstellbare Fahrgeschwindigkeits-Regelungs-system zur Konstanthaltung einer konstant zu fahrenden Geschwindigkeit ausgebildet ist, mit einer Steuerelektronik zur Ansteuerung einer Leistungsregeleinrichtung des Kraftfahrzeuges, wobei die Bedieneinheit (5) für das Grenzgeschwindigkeits - System von der Bedieneinheit (6) für das Fahrgeschwindigkeits-Regelungs-System räumlich getrennt ist, und wobei die Einrichtung so ausgelegt ist, dass bei Bedienung des einen Systems das andere System abgeschaltet wird.

2. Einrichtung nach Anspruch 1, **dadurch gekennzeichnet, dass** bei einem für die Einstellung des Fahrgeschwindigkeits-Regelungs-Systems vorgesehenen Lenkstockhebel (10) die Bedieneinheit (5) zur Einstellung des Grenzgeschwindigkeits-Systems einen weiteren Lenkstockhebel (9) aufweist.

3. Einrichtung nach Anspruch 2, **dadurch gekennzeichnet, dass** die Lenkstockhebel (9, 10) der beiden Bedieneinheiten (5, 6) einander entsprechende Schaltelemente und/oder Regelelemente haben.

4. Einrichtung nach Anspruch 2 oder 3, **dadurch gekennzeichnet, dass** die Lenkstockhebel (9, 10) spiegelbildlich zueinander angeordnet sind.

## Claims

1. Device for setting a limit speed system and a driving speed regulating system for a motor vehicle, in which a limit speed definable by means of an operator unit corresponds to a maximum or minimum driving speed of the motor vehicle and in which the driving speed regulating system likewise settable by means of an operator unit is designed to maintain a speed that is to be constantly driven, having an electronic control device for controlling a power regulating device of the motor vehicle, wherein the operator unit (5) for the limit speed system is spatially separate from the operator unit (6) for the driving speed regulating system and wherein the device is designed such that, upon operation of the one system, the other system is switched off.

2. Device according to claim 1, **characterized in that**, given the provision of a steering column stalk (10) for setting the driving speed regulating system, the operator unit (5) for setting the limit speed system comprises a further steering column stalk (9).

3. Device according to claim 2, **characterized in that** the steering column stalks (9, 10) of the two operator units (5, 6) have mutually corresponding switching elements and/or control elements.

4. Device according to claim 2 or 3, **characterized in that** the steering column stalks (9, 10) are disposed mirror-symmetrically to one another.

## Revendications

1. Dispositif de réglage d'un système de limitation de vitesse et d'un système de régulation de vitesse de déplacement pour un véhicule à moteur, dans lequel une vitesse limitée susceptible d'être définie au moyen d'une unité de commande correspond à une vitesse maximale ou minimale de déplacement du véhicule à moteur, et dans lequel le système de régulation de vitesse de déplacement, également réglable au moyen d'une unité de commande, est conçu pour maintenir une vitesse de déplacement constante, avec une électronique de commande servant à contrôler un organe de régulation de la puissance du véhicule à moteur, l'unité de commande (5) du système de limitation de vitesse étant séparée spatialement de l'unité de commande (6) du système de régulation de vitesse de déplacement, et le dispositif étant conçu de telle sorte que lors de la commande de l'un des systèmes, l'autre système soit désactivé.

2. Dispositif selon la revendication 1, **caractérisé en ce que** sur un levier de colonne de direction (10), prévu pour le réglage du système de régulation de vitesse de déplacement, l'unité de commande (5) pour le réglage du système de limitation de vitesse présente un autre levier de colonne de direction (9).

3. Dispositif selon la revendication 2, **caractérisé en ce que** les leviers de colonne de direction (9, 10) des deux unités de commande (5, 6) possèdent des éléments de commutation et/ou des éléments de réglage correspondant les uns aux autres.

4. Dispositif selon la revendication 2 ou 3, **caractérisé en ce que** les leviers de colonne de direction (9, 10) sont disposés en symétrie spéculaire l'un par rapport à l'autre.
